(19) Europäisches Patentamt
European Patent Office
Office européen des brevets

(11) **EP 2 410 312 A1**

(12) **EUROPEAN PATENT APPLICATION**

(43) Date of publication:
**25.01.2012 Bulletin 2012/04**

(51) Int Cl.:
*G01M 15/14* (2006.01)     *G05B 23/02* (2006.01)

(21) Application number: **11172136.1**

(22) Date of filing: **30.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.07.2010 RU 2010130189**

(71) Applicant: **Siemens Aktiengesellschaft 80333 Munich (DE)**

(72) Inventors:
• **Kalinkin, Mikhail**
 **198504 St. Petersburg (RU)**
• **Lang, Bernhard**
 **81739 München (DE)**
• **Loginov, Alexander**
 **197227 St. Petersburg (RU)**

(54) **A method for computer-assisted analyzing of a technical system**

(57)     A method for computer-assisted analyzing of a technical system

The invention refers to a method for computer-assisted analyzing of a technical system, where the technical system is described by a case base (CB) comprising a plurality of cases (C), where each case (C) includes a state vector (SV) with a number of attributes, said state vector (SV) referring to an operation state of the technical system (GT), and where a class (CL, CL1, CL2) out of a number of classes (CL, CL1, CL2) is assigned to each case (C), each class referring to an operation condition of the technical system (GT). In a first step of the invention, each case (C) in the case base (CB) is processed by extracting for each case (C) a local information vector (LI) depending on the classes (CL, CL1, CL2) of one or more neighboring cases (NC) in the case base (CB), said neighboring cases (NC) being similar to the case (C) being processed according to a neighborhood measure. In a second step of the invention, machine learning of a classification is performed based on said extracted local information vectors (LI) of the cases (C) in the case base (CB), resulting in a learned adaptation function (AF) providing a class (CL, CL1, CL2) in dependence on a local information vector (LI) extracted for a case (C). The method of the invention is based on the idea to combine a method for retrieving local information for cases in a case base with a method for machine learning of a classification. This leads to a learned classification providing good results for assessing an operation condition of a technical system based on operation state vectors occurring during its operation. The method may be applied to different technical systems. Particularly, a gas turbine for power generation may be analyzed by the method of the invention.

FIG 1

EP 2 410 312 A1

**Description**

The invention refers to a method for computer-assisted analyzing of a technical system and to a method for computer-assisted diagnosis of a technical system. Furthermore, the invention relates to a technical system and a computer program product.

In technical systems, like turbines and particularly gas turbines for power generation, it is extremely important to detect faults or defects at an early stage such that parts can be replaced before a failure of the turbine. Conventionally, the operator of a technical system performs preventative maintenance actions at fixed intervals in order to avoid potential failures of the system.

Recently, manufacturers of technical systems and particularly gas turbines use computer-assisted condition monitoring methods in which intelligent data analysis systems are employed to assess the operation of the technical system and to detect faults and defects well before a complete failure of the system. To perform such condition monitoring, many sensors are installed in the technical system which collect operational data of the system and transmit this data to a monitoring center. In the monitoring center, the sensor data is preprocessed and analyzed by human operators with the help of rule-based expert systems. However, rule-based expert systems have some drawbacks. The maintainability of such systems is poor. Due to the complex structure of technical systems and the great amount of sensor information, the number of rules for monitoring the condition of the system is normally very big. Furthermore, new rules have to be added manually by engineers. This is usually a very tiring procedure since various conflicts and redundancies with other rules have to be avoided. Moreover, the results of rule-based expert systems are often not very precise.

It is an object of the invention to provide a method for computer-assisted analyzing of a technical system based on which a good and precise diagnosis of the technical system can be provided.

This object is solved by the independent patent claims. Preferred embodiments of the invention are described in the dependent claims.

The method of the invention enables a computer-assisted analysis of a technical system, said technical system being described by a case base comprising a plurality of cases, where each case includes a state vector with a number of attributes, said state vector referring to an operation state of the technical system, and where a class out of a number of classes is assigned to each case, each class referring to an operation condition of said technical system. Hence, the case base for describing the technical system forms a repository of digital data referring to known and/or former measured or sensed operation states. These operation states may be detected by respective sensors included in the technical system or may refer to specific technical parameters of the system.

The method of the invention comprises a step i) in which each case in the case base is processed by extracting for each case a local information vector depending on the classes of one or more neighboring cases in the case base, said neighboring cases being similar to the case being processed according to a neighborhood measure. In a step ii), a classification is learned by machine learning based on said extracted local information vectors of the cases in the case base, resulting in a learned adaptation function providing a class in dependence on a local information vector extracted for a case. The terms "state vector" and "local information vector" are to be interpreted broadly in the context of the invention. I.e., such vectors may only include a single entry and, thus, form a scalar value.

The idea of the invention is based on a combination of the extraction of neighboring cases which is known from conventional case-based reasoning with a machine learning method learning an adaptation function based on the classes of the neighboring cases. As a consequence, a learned classification is provided which is adapted to the specific case base used for describing the technical system. Hence, the analyzing method is well adapted to the technical system in consideration such that good classification results and, thus, a good assessment of the operation condition of the technical system are provided.

The method of the invention may be used for analyzing different technical systems. In a preferred embodiment, the technical system being described by the case base is a turbine, particularly a gas turbine for power generation. In such a turbine, the attributes of the state vector referring to the operation state may for example include the distribution of the temperature in the turbine during operation and/or the gas pressures occurring at various locations in the turbine and/or vibrations in the turbine and/or the consumption of gas and/or the produced electric power of the turbine and/or the efficiency of the turbine and the like. In general, the number of attributes of a state vector may comprise sensor data detected by sensors in the corresponding technical system and/or one or more (known) specifications of the technical system and/or features extracted from sensor data. Those features may be high-level features, which are derived by known statistical or machine learning techniques from the raw sensor data.

In another preferred embodiment of the invention, the neighborhood measure used in step i) represents a distance between the state vectors of two cases, said distance being derived from the number of attributes of said state vectors. The local information vector extracted in step i) of the inventive method is based on the classes of neighboring cases. There are several possibilities to define appropriate local information vectors. In one embodiment of the invention, the local information vector for at least one case and particularly each case out of the case base comprises an entry for each class of the number of classes where an entry of a class is the minimum distance between the state vector of said at least one case and the state vectors of the cases classified in the class of said entry. In another embodiment, the local information vector for at least one case and particularly each case out of the case base comprises an entry for each class of the number of classes, where said entry is one for the class of the neighboring case being most similar to said at least one case according to the neighborhood measure and where said entry is zero otherwise.

In another embodiment of the invention, a predetermined number of cases being most similar to the case being processed are used in step i) as said one or more neighboring cases. This embodiment refers to the well-known k nearest neighbor's method. In a preferred variant of this embodiment, the local information vector for at least one case and particularly each case out of the case base comprises one of the following vectors:

- a vector comprising an entry for each case of the predetermined number of cases, where said entry is the class of the case assigned to said entry;
- a vector comprising an entry for each class of the number of classes, where said entry is the count of cases classified in the class of said entry out of the predetermined number of cases.

In another variant of the invention, the local information vector for at least one case and particularly each case out of the case base comprises an entry for each class of the number of classes, where said entry comprises a sum of weighting factors for cases classified in the class of said entry out of the predetermined number of cases, each weighting factor being the reciprocal of the distance between the state vector of the respective case classified in the class of said entry out of the predetermined number of state vectors and the state vector of said at least one case. Different machine learning methods may be used in step ii) of the inventive method. In preferred embodiments, one or more of the following learning methods are applied:

- learning an artificial neural network, particularly a multi-layer perceptron;
- learning based on a decision tree, particularly based on a Classification and Regression Tree;
- learning based on classification rules using genetic programming.

The above learning methods are well-known in the state of the art and, thus, are not described in detail.
As mentioned above, the number of classes used in the method of the invention refers to operation conditions of the technical system. Different operation conditions may be defined according to the specific system. In a preferred embodiment, the number of classes comprises two classes, one class referring to a normal operation condition of the technical system and the other class referring to an abnormal operation condition of the technical system.
In a further variant of the invention, several case bases referring to different operation regimes of the technical system are provided, each case base being processed separately by steps i) and ii) according to the invention. As a consequence, the analysis of the technical system is adapted to different operation environments, resulting in a more precise analysis. In a preferred embodiment in which the technical system is a turbine, one operation regime refers to the start-up phase of the turbine and another operation regime refers to the operation of the turbine after the start-up phase. The case bases for those two regimes are usually very different such that better results can be achieved by treating those regimes separately.
The above described method for analyzing a technical system provides a learned classification in the form of an adaptation function which may be used for diagnosis of a technical system. Hence, the invention also refers to a method for computer-assisted diagnosis of a technical system, wherein an unclassified case including a state vector referring to a current operation state of the technical system during its operation is classified by a classification learned by the analysis method of the invention, where for applying the classification the local information vector is extracted for the unclassified case by using the appropriate extraction method which has also been used during the learning phase of the classification.
In a preferred embodiment of this method, an unclassified case is added to the case base, after said case has been classified. Thus, the case base is continuously updated by newly classified cases occurring during the operation of the technical system. Hence, the case base continuously grows so that it is advantageous to repeat the above learning of the classification in regular intervals in order to adapt the analysis to new cases in the case base.
In another embodiment of the invention, the method for diagnosis of the technical system is combined with a classification learned for different operation regimes. In such an embodiment, the operation regime of the technical system is detected during its operation and the unclassified case is classified by the learned classification of the case base of the detected operation regime.
Besides the above described methods, the invention also refers to a technical system wherein the technical system is arranged such that the above method for diagnosis is performed during operation of the technical system. Furthermore, the invention refers to a computer program product, directly loadable into the internal memory of a digital computer, comprising software code portions for performing the inventive method for analyzing a technical system or the inventive method for diagnosis of a technical system when the product is run on a computer.

Embodiments of the invention will now be described with respect to the accompanying drawings wherein

Fig. 1     shows a diagram illustrating the steps for diagnosis of a technical system being based on a classification learned according to an embodiment of the invention;

Fig. 2     is a diagram illustrating the steps for learning a classification according to an embodiment of the invention;

Fig. 3     is a diagram illustrating the steps for diagnosis of a new case based on the classification learned in Fig. 2; and

Fig. 4     illustrates a data set which is used for testing classification methods according to the invention.

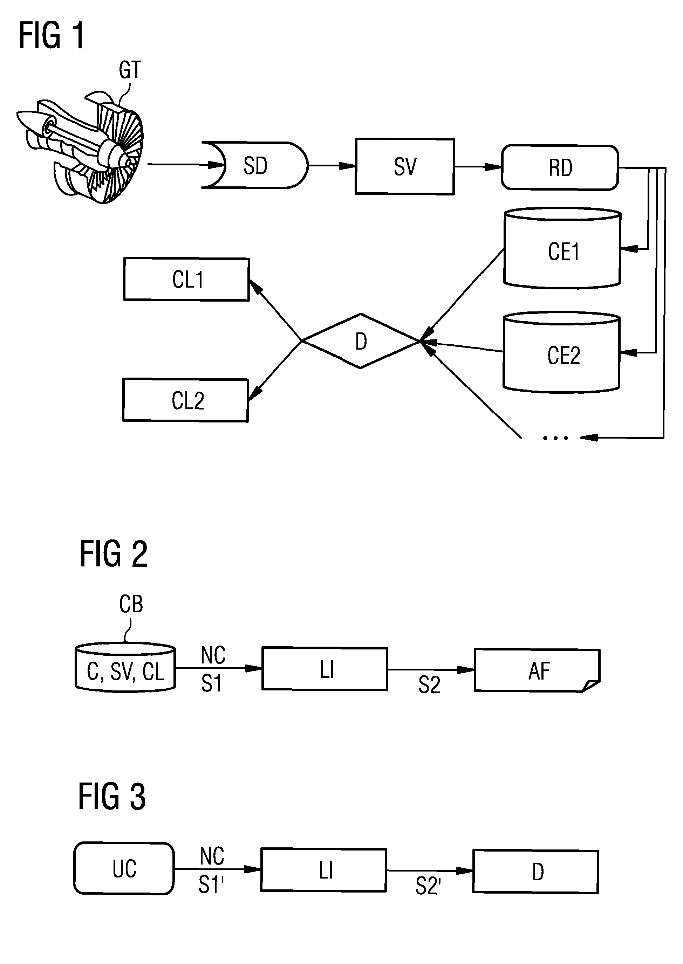

The method of the invention refers to the analysis of a technical system. The result of this method is a learned classification which is used for classifying measured or detected operation states of the technical system, thus leading to a method for a diagnosis of a technical system during its operation. Fig. 1 shows an embodiment of such a method of diagnosis which is applied to a gas turbine GT. At first, corresponding sensor data SD during the operation of the gas turbine is collected at predetermined time intervals. This raw time-series sensor data is transformed in the next step to high level discriminate features resulting in state vectors SV describing the operation state of the technical system at predetermined time intervals. Each state vector forms a (unclassified) case which is to be classified according to the diagnosis method. In order to extract features in form of state vectors SV from the sensor data SD, any well-known statistical or machine learning technique may be used.

After having extracted the high-level features, the operation regime of the gas turbine GT is detected. This operation regime describes the operation environment in which the gas turbine GT is operated. Typical operation environments are the start-up phase of the gas turbine as well as the normal operation environment of the gas turbine or other regimes. The step of regime detection is designated by RD in Fig. 1. Any known methods for pattern recognition may be used to detect the regimes from the state vectors SV. Particularly, machine learning classification techniques, like neural networks, support vector machines or decision trees may be applied to determine the current operation regime of the gas turbine GT. For each regime, there exists a case-based expert system where two case-based expert-systems CE1 and CE2 are shown in Fig. 1. Case-based expert system CE1 refers to the start-up regime of the gas turbine GT whereas case-based expert system CE2 refers to the normal operation regime of the gas turbine GT. Each case-based expert system forms a learned classification which is learned on training data of cases referring to former measured operation states with known classes, said operation states being detected in the regime of the corresponding case-based expert system. Hence, for each expert system a corresponding case base of classified cases in the respective regime is used for learning the classification. The method of learning the corresponding classification will be described in more detail below.

In the embodiment shown in Fig. 1, the classification of all case-based expert systems is based on two classes, namely a class for a normal behavior of the gas turbine designated by CL1 and a class for an abnormal behavior of the gas turbine designated as CL2. An abnormal behavior refers to a behavior which indicates that there is probably a fault in the operation of the gas turbine. Based on the case-based expert system of the regime detected in step RD, the classes of the state vectors SV are determined in the diagnosis step D in Fig. 1. As a result, it is determined whether a state vector SV of the gas turbine GT refers to a normal behavior according to class CL1 or an abnormal behavior according to class CL2. In case that an abnormal behavior is detected, corresponding counter measures may be initiated, e.g. an alarm may be output or a technical check-up of the gas turbine may be initiated.

In the following, a method for learning a corresponding case-based expert system as shown in Fig. 1 is described in detail with reference to Fig. 2. The method uses features of so-called cased-based reasoning where a case base of a plurality of cases being the training data is used for reasoning, i.e. deriving a class for a new case being a state vector SV detected during the operation of the gas turbine GT in the scenario of Fig. 1. In general, there are several approaches known in the state of the art referring to case-based reasoning. Document [1] proposes a hybrid approach which combines case based reasoning and neural networks, namely Radial Basis Networks, in order to forecast the thermal structure of oceanic water. This method refers to a regression problem. In the learning phase, the Radial Basis Network is trained on retrieved neighbors (i.e. similar cases) for each case. In the test phase, the Radial Basis Network acts as a function that obtains the most representative solution from solutions of nearest neighbors. The inventive method as described in the following has similarities to the method of document [1]. However, contrary to document [1], the method of the invention is used in order to learn a classification and is based on different adaptive models.

As indicated in Fig. 2, the method as described in the following uses a case base CB including a plurality of cases C, each case comprising a corresponding state vector SV which refers to a measured operation state of a technical system to be investigated, e.g. the gas turbine GT as shown in Fig. 1. In other words, a case x is represented by a state vector or point in an 1-dimensional space $<a_1(x), a_2(x), ..., a_l(x)>$. Here, 1 is the number of attributes, each attribute forming an entry of the state vector included in the case base CB. For each case in the case base CB, a class CL represented by the variable $c(x)$ is assigned to this case. The class belongs to a set of possible classes $c_1, c_2, ..., c_m$, where m is the total number of possible classes. In the learning method shown in Fig. 1, for each case in the case base CB, k nearest neighbors $x_1^{neigh}, x_2^{neigh}, ..., x_k^{neigh}$, i.e. k cases in the case base being most similar to the case currently being processed, are retrieved from the case base. According to the above notation, $x_1^{neigh}$ is the nearest neighboring case, $x_2^{neigh}$ is the second nearest neighboring case and $x_k^{neigh}$ is the uttermost neighboring case. To describe the similarity or neighborhood between the cases, a distance is defined, which is measured by some metric, e.g. Euclidian metric. The lower the distance between two cases, the higher is the neighborhood and similarity between two cases.

In the embodiment described herein, the following distance is used as a neighborhood measure in order to describe the similarity between a case x and a case $x_i^{neigh}$:

$$d(x, x_i^{neigh}) = \sqrt{\sum_{r=1}^{l} (a_r(x) - a_r(x_i^{neigh}))^2} \ .$$

According to the above equation, the Euclidian distance based on the attributes of two cases is used for describing the similarity of two cases.

In conventional methods, which do not use a method for learning a classification, the k nearest neighbors retrieved from a case base as described above are used in order to determine the class of a new case not yet classified. To do so, for an unclassified new case $c(x)$, the retrieved cases $cx_i^{neigh}$ and the distances to them $d(x, x_i^{neigh})$ are used to predict $c(x)$, i.e. to classify the unclassified case. If exactly the same case $x_j^{neigh}$ is found, i.e. if $d(x, x_j^{neigh})=0$, then usually the class of the new case is set as follows: $c(x)=c(x_j^{neigh})$. However, if, as occurs far more often, no exact match is found, then the class can be retrieved by the following conventional adaptation strategies using the k nearest neighbors retrieved for the new case $c(x)$ :

-   Conventional nearest neighbor rule:

$$c(x) = \arg\max_{c'=c_1, c_2, ..., c_m} \delta(c', c(x_1^{neigh})) ,$$

where $\delta(i,j)=1$ if $i=j$ and $\delta(i,j)=0$ if $i \neq j$,

-   Conventional majority voting rule:

$$c(x) = \arg\max_{c'=c_1, c_2, ..., c_m} \sum_{i=1}^{k} \delta(c', c(x_i^{neigh})) ,$$

-   Conventional weighted majority voting:

$$c(x) = \arg\max_{c'=c_1, c_2, ..., c_m} \sum_{i=1}^{k} \frac{\delta(c', c(x_i^{neigh}))}{d(x, x_i^{neigh})} \ .$$

However, the above conventional strategies depend on the data set used and none of the conventional methods is universal in the sense that it may be adequately applied to different data sets. Contrary to that, the idea of the invention is not to fix an adaptation strategy, but to adaptively learn it for each data set in the form of a corresponding case base forming the training data. According to the embodiment described in the following, three different machine learning algorithms are used in order to learn a classification based on a case base CB. To apply the learning method, in a first step S1 shown in Fig. 2, corresponding nearest neighboring cases NC based on the above distance are retrieved for each case in the case base CB. For each set of nearest neighbors derived for each case, a corresponding local information vector LI is determined based on which the learning method is performed. According to different embodiments, the local information vector LI may be extracted by different methods. Examples of local information vectors which may be used according to the invention are as follows:

- A local information vector based on classes of neighbors and defined as follows:

$$[c(x_1^{neigh}), c(x_2^{neigh}), ..., c(x_k^{neigh})].$$

This information vector includes an entry for each of k nearest neighbors for the case x, where the entry represents the class of the respective nearest neighbor.

- A local information vector based on minimum distances and defined as follows:

$$[\min d(x, X_1), \min d(x, X_2), ..., \min d(x, X_m)],.$$

This information vector includes an entry for each possible class and $X_i$ is the set of all cases of the case base being assigned to class $c_i$.

- A local information vector based on the nearest neighbor and being defined as follows:

$$[0, ..., 0, 1, ..., 0].$$

This vector has an entry for each possible class, where the index of the nonzero element is equal to the class of the neighboring case being most similar to the case for which the local information is retrieved. For example, if there are four classes in total, and for some case the class of the most similar case is two, then the above vector will look as follows: [0,1,0,0]. This strategy is similar to conventional nearest neighbor rule.

- A local information vector being based on majority and defined as follows:

$$[\sum_{i=1}^{k} \delta(c_1, c(x_i^{neigh})), \sum_{i=1}^{k} \delta(c_2, c(x_i^{neigh})), ..., \sum_{i=1}^{k} \delta(c_m, c(x_i^{neigh}))].$$

This local information vector has an entry for each possible class, where the entry represents the count of the cases of the nearest neighbors being assigned to the respective class.

- A local information vector based on weighted majority and defined as follows:

$$[\sum_{i=1}^{k} \frac{\delta(c_1, c(x_i^{neigh}))}{d(x, x_i^{neigh})}, \sum_{i=1}^{k} \frac{\delta(c_2, c(x_i^{neigh}))}{d(x, x_i^{neigh})}, ..., \sum_{i=1}^{k} \frac{\delta(c_m, c(x_i^{neigh}))}{d(x, x_i^{neigh})}].$$

This vector comprises an entry for each possible class, where each entry is a sum of weighting factors for neighboring cases classified in the respective class, the weighting factor for each neighboring case being defined as the reciprocal of the above defined distance d(x, $x_i^{neigh}$). This strategy is similar to convention weighted majority rule.
After having extracted the local information LI as shown in Fig. 2, an appropriate machine learning method is used in step S2 in order to learn a case adaptation function AF, where the learned adaptation function provides a class in dependence on a local information vector and thus in dependence on a case for which the local information vector has been extracted.

In the following, three machine learning methods which may be used according to the invention will be described. The machine learning methods per se are well known so that the methods will not be explained in detail.

As a first machine learning method, artificial neural networks and particularly feed-forward neural networks may be used. Those networks are biologically inspired function approximation algorithms with successive applications in numerous fields. In one embodiment of the invention, a basic multi-layer perceptron model is used as a neural network which consists of a series of functional transformation. The multi-layer perceptron includes an input layer, an output layer and a number of hidden layers. In one realization of the invention, a network with H sigmoid units in the first hidden layer, L sigmoid units in the second hidden layer and a single linear output unit was used, which can be described by the following function f(x):

$$f(x) = w_b + \sum_{l=1}^{L} w_l \sigma\left(w_{b.l} + \sum_{h=1}^{H} w_{l,h} \sigma\left(w_{b,h} + \sum_{j=1}^{n} w_{h,j} \alpha_j(x)\right)\right).$$

According to this function, for a given case x, a corresponding class *f(x)* is output. In the above formula, w is a set of network adjustable parameters (weights) and $\sigma$ is the sigmoid activation function, which is defined as follows:

$$\sigma(x) = \frac{1}{1 + e^{-x}}.$$

The above term $\alpha_j(x)$ refers to the corresponding entries of the local information vector for the case x.

In another embodiment of the invention, decision trees are used for machine learning the adaptation function. Decision trees per se are known. In a variant of the invention, the so-called Classification and Regression Tree (abbreviated as CART) is applied for learning the adaptation function. The CART decision tree is described in detail in document [2]. The main difference of the CART decision tree from other decision tree algorithms is the binary splitting of data. According to this tree, data is splitted more slowly, repeated splits on the same attributes are allowed, thus resulting in a better performance of the CART decision tree in comparison to conventional decision trees.

In another embodiment of the invention, the adaptation function is learned based on classification rules by using genetic programming. In this method, symbolic rules are derived with the help of the search power of a genetic algorithm. A description of this learning method is found in document [3]. The rules learned by this method are represented as conjunction of constraints on attributes. An example of a rule may look as follows:

IF ($A_1$ < 0.2) AND (23.4 < $A_4$ < 41.7) AND ($A_{10}$ > 4.3) THEN *class1*.

Here $A_1$, $A_4$, and $A_{10}$ are attributes of the corresponding local information vector LI and *class1* is the predicted class. During learning phase, one rule for each class is learned using genetic algorithm to tune numerical boundaries and the number of constraints on attributes.

After having learned the adaptation function AF as shown in Fig. 2, this function is used in a corresponding case-based expert system, e.g. in the case-based expert system CE1 or CE2 shown in Fig. 1. Fig. 3 shows how the learned adaptation function AF is applied to a new, unclassified case UC representing for example a state vector SV of the gas turbine GT shown in Fig. 1. At first, the corresponding local information vector LI is extracted for the new case UC in step S1' by using corresponding nearest neighboring cases NC. This local information vector LI is used in step S2' as an input to the learned adaptation function AF, thus resulting in a diagnosis D of the new case in the form of an output of a class for the new case.

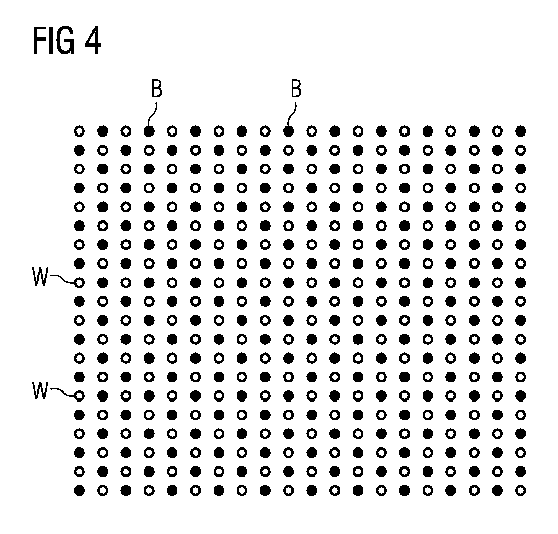

Based on the above described machine learning in the form of a neural network, a CART decision tree or genetic rules as well as based on the above described different local information vectors LI, corresponding embodiments of the invention have been tested by the inventors on different data sets. One example of a data set which was used for testing consists of 400 data points located at a rectangular lattice. Fig. 4 shows the structure of this data set. The data set includes two classes, namely black circles B and white circles W. Each white point is surrounded by black points and vice versa. The neighborhood measure is the distance between two points in the lattice as shown in Fig. 4. The method of the invention was compared with conventional adaptation strategies, namely nearest neighbor rule, majority voting rule and weighted majority voting rule. These strategies had a poor performance on this data set. Contrary to that, the learning of the adaptation function based on embodiments of the invention leaded to good results.

To validate the methods, an average accuracy measure was used. Accuracy is calculated as the number of correctly predicted values (e.g., sum of true positives and true negatives for binary classification) divided by overall number of cases. Cross validation technique was used with 80% of data for training and 20% for testing. Five runs of the respective algorithm were made. The experiment was repeated 100 times with random permutation of data set points beforehand. The averaged accuracy and standard deviation over all runs was calculated. The result of embodiments of the invention in comparison to conventional methods is shown in the following table:

| Local information vector | Neural network | | CART | | Genetic rules | | Conventional approaches | |
|---|---|---|---|---|---|---|---|---|
| | mean | std. dev. | mean | std. dev. | mean | std. dev. | mean | std. dev. |
| classes of neigh-bors | 60.8 | 3.8 | 64.3 | 3.3 | 63.6 | 4.3 | - | - |
| min. distances | 70.7 | 4.0 | 78.6 | 2.8 | 70.5 | 4.5 | - | - |
| near. neighbor | 64.3 | 3.2 | 64.9 | 3.1 | 63.6 | 3.6 | 35.6 | 3.1 |
| majority | 54.0 | 3.4 | 53.7 | 3.8 | 53.5 | 2.9 | 46.0 | 3.4 |
| weighted majority | 57.2 | 3.7 | 54.4 | 3.6 | 50.0 | 4.2 | 36.2 | 3.5 |

The results of embodiments of the invention are given in the left part of the table and corresponding results for conventional approaches are given in the last column of the table.

For those adaptive strategies that do not have corresponding conventional strategies, no number is included in the last column. Evidently, for each learning method and for each type of local information, the method based on the invention leads to accuracies much better than the accuracies of conventional methods.

The invention as described in the foregoing has a number of advantages. Particularly, the classification is appropriately adapted to the training data in the case base used for learning the adaptation function. The method of the invention combines the advantages of two different approaches, namely case-based reasoning for extracting local information vectors and model-based classification in the form of neural networks or decision trees or genetic rules. This combination works well for different categories of training data.

The method of the invention enables to adapt to changing environments of a technical system. E.g., parts of a turbine tend to degrade with time and also new equipment may be installed on the turbine. These changes can be taken into account by updating the case base and repeating the learning of the adaptation function. As a consequence, if the environment changes, the learned adaptation knowledge will be different and fit to the current situation. In comparison to conventional rule-based systems, the maintenance of the method according to the invention is much simpler. Particularly, new cases can be automatically generated during the operation of a technical system and can be easily added to an already existing case base.

Furthermore, the method of the invention has the ability to handle missing inputs. Missing inputs can appear if one case-based expert system is used for technical systems with different configurations. Some equipment may be installed on one technical system and be absent on others. Contrary to rule-based expert systems, a case-based expert system based on the invention can easily handle such missing inputs.

Literature

[1] Corchado J. M., Lees B., Fyfe C., Rees N. and Aiken J. (1998), Neuro-Adaptation Method for a Case Based Reasoning System, International Joint Conference on Neural Networks, Anchorage, Alaska, USA. May 4-9.

[2] Breiman et al., 1984, Classification and regression trees, Wadsworth, Belmont, pp. 1-58.

[3] Bojarczuk et al., Discovering comprehensible classification rules using genetic programming: a case study in a medical domain, in: Proceedings of the GECCO'99, Morgan Kaufmann, San Francisco, 1999, pp. 953-958.

**Claims**

1. A method for computer-assisted analyzing of a technical system (GT), said technical system (GT) being described by a case base (CB) comprising a plurality of cases (C), where each case (C) includes a state vector (SV) with a number of attributes, said state vector (SV) referring to an operation state of the technical system (GT), and where a class (CL, CL1, CL2) out of a number of classes (CL, CL1, CL2) is assigned to each case (C), each class (CL, CL1, CL2) referring to an operation condition of said technical system (GT), said method comprising the steps of:

   i) processing each case (C) in the case base (CB) by extracting for each case (C) a local information vector (LI) depending on the classes (CL, CL1, CL2) of one or more neighboring cases (NC) in the case base (CB), said neighboring cases (NC) being similar to the case (C) being processed according to a neighborhood measure;
   ii) machine learning of a classification based on said extracted local information vectors (LI) of the cases (C) in the case base (CB), resulting in a learned adaptation function (AF) providing a class (CL, CL1, CL2) in dependence on a local information vector (LI) extracted for a case (C).

2. The method according to claim 1, wherein the technical system (GT) being described by the case base (CB) is a turbine, particularly a gas turbine for power generation.

3. The method according to claim 1 or 2, wherein said number of attributes of a state vector (SV) comprises sensor data (SD) and/or one or more specifications of the technical system (GT) and/or features extracted from sensor data (SD).

4. The method according to one of the preceding claims, wherein the neighborhood measure used in step i) represents a distance between the state vectors (SV) of two cases, said distance being derived from the number of attributes of said state vectors (SV).

5. The method according to claim 4, wherein the local information vector (LI) for at least one case (C) out of the case base (CB) comprises an entry for each class (CL, CL1, CL2) of the number of classes (CL, CL1, CL2), where an entry of a class (CL, CL1, CL2) is the minimum distance between the state vector (SV) of said at least one case (C) and the state vectors of the cases classified in the class (CL, CL1, CL2) of said entry.

6. The method according to one of the preceding claims, wherein the local information vector (LI) for at least one case (C) out of the case base (CB) comprises an entry for each class (CL, CL1, CL2) of the number of classes (CL, CL1, CL2), where said entry is one for the class of the neighboring case (NC) being most similar to said at least one case (C) and where said entry is zero otherwise.

7. The method according to one of the preceding claims, wherein a predetermined number of cases (NC) being most similar to the case (C) being processed is used in step i) as said one or more neighboring cases (NC).

8. The method according to claim 7, wherein the local information vector (LI) for at least one case (C) out of the case base (CB) comprises one of the following vectors:

   - a vector comprising an entry for each case (NC) of the predetermined number of cases (NC), where said entry is the class (CL, CL1, CL2) of the case (C) assigned to said entry;
   - a vector comprising an entry for each class (CL, CL1, CL2) of the number of classes (CL, CL1, CL2), where said entry is the count of cases (NC) classified in the class of said entry out of the predetermined number of cases (NC).

9. The method according to one of the preceding claims in combination with claims 4 and 7, wherein the local information vector (LI) for at least one case (C) out of the case base (CB) comprises an entry for each class (CL, CL1, CL2) of the number of classes (CL, CL1, CL2), where said entry comprises a sum of weighting factors for cases (NC) classified in the class (CL, CL1, CL2) of said entry out of the predetermined number of cases (NC), each weighting factor being the reciprocal of the distance between the state vector of the respective case (NC) classified in the class (CL, CL1, CL2) of said entry out of the predetermined number of cases (NC) and the state vector (SV) of said at least one case (C).

10. The method according to one of the preceding claims, wherein the machine learning in step ii) comprises one or more of the following learning methods:

   - learning an artificial neural network, particularly a multi-layer perceptron;
   - learning based on a decision tree, particularly based on a Classification and Regression Tree;
   - learning based on classification rules using genetic programming.

11. The method according to one of the preceding claims, wherein the number of classes (CL, CL1, CL2) comprises two classes, one class (CL1) referring to a normal operation condition of the technical system (GT) and the other class (CL2) referring to an abnormal operation condition of the technical system (GT).

12. The method according to one of the preceding claims, wherein several case bases (CB) referring to different operation regimes of the technical system (GT) are provided, each case base (CB, CB1, CB2) being processed separately by steps i) and ii) of claim 1.

13. The method according to claim 12 in combination with claim 2, wherein one operation regime refers to the start-up phase of the turbine and another operation regime refers to the operation of the turbine after the start-up phase.

14. A method for computer-assisted diagnosis of a technical system (GT), wherein an unclassified case (UC) including a state vector (SV) referring to a current operation state of the technical system (GT) during its operation is classified by a classification learned by a method according to one of the preceding claims, where for applying the classification the local information vector (LI) is extracted for the unclassified case.

15. The method according to claim 14, wherein an unclassified case (UC) is added to the case base (CB), after said case (NV) has been classified.

16. The method according to claim 14 or 15 in combination with a classification learned according to claim 12, wherein the operation regime of the technical system (GT) is detected during its operation and the unclassified case (UC) is classified by the learned classification of the case base (CB) of the detected operation regime.

17. Technical system, wherein said technical system (GT) is arranged such that the method for diagnosis according to one of claims 14 to 16 is performed during operation of the technical system (GT).

18. Computer program product, directly loadable into the internal memory of a digital computer, comprising software code portions for performing a method according to one of claims 1 to 16 when said product is run on a computer.

## FIG 1

## FIG 2

## FIG 3

# FIG 4

Europäisches
Patentamt

European
Patent Office

Office européen
des brevets

**EUROPEAN SEARCH REPORT**

Application Number

EP 11 17 2136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/060323 A1 (LEUNG YING TAT [US] ET AL) 17 March 2005 (2005-03-17) * the whole document * ----- | 1-18 | INV. G01M15/14 G05B23/02 |
| X | US 2006/217870 A1 (HOFF THOMAS V [CH] ET AL HOFF THOMAS VON [CH] ET AL) 28 September 2006 (2006-09-28) * the whole document * ----- | 1-18 | |
| A | US 2008/154473 A1 (VOLPONI ALLAN J [US] ET AL) 26 June 2008 (2008-06-26) * abstract * * figures 1,4,5 * * claims 1-11 * ----- | 1-18 | |

TECHNICAL FIELDS
SEARCHED        (IPC)

G01M
G05B

The present search report has been drawn up for all claims

| Place of search | Date of completion of the search | Examiner |
|---|---|---|
| The Hague | 17 November 2011 | Daman, Marcel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
....................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 17 2136

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | | Publication date | Patent family member(s) | | Publication date |
|---|---|---|---|---|---|
| US 2005060323 | A1 | 17-03-2005 | US | 2005060323 A1 | 17-03-2005 |
| | | | US | 2007288795 A1 | 13-12-2007 |
| US 2006217870 | A1 | 28-09-2006 | AT | 403898 T | 15-08-2008 |
| | | | CN | 1837767 A | 27-09-2006 |
| | | | EP | 1705542 A1 | 27-09-2006 |
| | | | US | 2006217870 A1 | 28-09-2006 |
| | | | US | 2011160980 A1 | 30-06-2011 |
| US 2008154473 | A1 | 26-06-2008 | CA | 2613912 A1 | 22-06-2008 |
| | | | CN | 101206685 A | 25-06-2008 |
| | | | EP | 1936461 A1 | 25-06-2008 |
| | | | US | 2008154473 A1 | 26-06-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **CORCHADO J. M. ; LEES B. ; FYFE C. ; REES N. ; AIKEN J.** *Neuro-Adaptation Method for a Case Based Reasoning System, International Joint Conference on Neural Networks,* 1998
- **BREIMAN et al.** Classification and regression trees. Wadsworth, 1984, 1-58
- Discovering comprehensible classification rules using genetic programming: a case study in a medical domain. **BOJARCZUK et al.** Proceedings of the GECCO'99. Morgan Kaufmann, 1999, 953-958